# EUROPEAN PATENT APPLICATION

(11) **EP 1 500 692 A1**
(43) Date of publication of application: **26.01.2005**
(21) Application number: 04014850.4
(22) Date of filing: 24.06.2004
(51) Int. Cl.: C10L 9/10, C10L 10/02, C10L 10/06

(54) **Simultaneous reduction of NOx and carbon in ash from burning coal by using manganese**

(30) Priority: 21.07.2003 US 623686
(71) Applicant: ETHYL PETROLEUM ADDITIVES, INC., Richmond, Virginia 23219-4304 (US)
(72) Inventor: Factor, Stephen A., Richmond, Virginia 23233 (US); DiGiamberardino, Tommaso, 1460 Ittre (BE)
(74) Representative: Schwabe - Sandmair - Marx

(57) **Abstract**

The present invention relates to an additive and method to simultaneously reduce both the carbon in ash and the NOx production levels resulting from the combustion of coal by the use of at least one manganese-containing additive. Use of a manganese-containing additive in a coal burning utility furnace results in both a lower carbon in ash content and lower NOx emissions.

## Description

### FIELD OF THE INVENTION

The present invention relates to an additive and a method for simultaneously reducing the production of both NOx and carbon in ash from the combustion of fuel containing coal by means of adding to the fuel an effective amount of a manganese compound.

### BACKGROUND

When burning fuels such as fuel oil and coal in boilers, incinerators, and utility furnaces, the ability to achieve high combustion efficiency and low emissions is of paramount importance. One of the most direct ways to improve combustion efficiency is to increase the volume of combustion air in order to ensure a complete oxidation of carbon-carbon, carbon-hydrogen, and carbon-heteroatom bonds to give combustion products of carbon dioxide arid water. Higher carbon dioxide content in the combustion products means increased combustion efficiency and also lower carbon content in the ash. Unfortunately, an increase in the volume of combustion air can promote NOx formation. In other words, with increased combustion air, there is an inverse relationship between combustion efficiency (reduced carbon in ash) and NOx production, such that when one is improved, the other deteriorates. This problem is particularly manifest in combustion systems employing a recirculation of exhaust gases, such as those commonly referred to as Flue Gas Recirculation (FGR) systems. By lowering the flame temperature, FGR lowers NOₓ at the expense of increased carbon in ash. Conventional combustion science ascribed to this type of combustion at ambient pressure teaches that there is a trade-off between NOx and unburned carbon, namely measures that are designed to lower NOx will inherently increase levels of unburned carbon, and vice versa. Metal-containing additives are known to achieve one or the other, in various combustion systems, but not both simultaneously. Previous and conventional attempts to get around this usually required a series of multiple methods applied to each carbon burnout and NOx independently in order to keep them under control or at acceptable levels.

### SUMMARY OF THE EMBODIMENTS

In an embodiment, the present invention relates to methods to improve both the carbon burnout (i.e., lower carbon in ash) of coal burning facilities. and the NOx production levels by the use of at least one manganese-containing additive compound. Use of a manganese-containing additive in a coal burning facility, such as a utility furnace, as taught herein, results in both a lower carbon in ash content and lower NOx emissions.

It is to be understood that both the foregoing general description and the following detailed description are exemplary and explanatory only and are intended to provide further explanation of the present invention, as claimed.

### BRIEF DESCRIPTION OF THE DRAWINGS

Fig. 1 illustrates the performance of a manganese containing additive on NOx reduction.
Fig. 2 illustrates the reduction of carbon in ash and carbon monoxide by the use of a manganese-containing additive.

### DETAILED DESCRIPTION OF EMBODIMENTS

Conventional combustion science ascribed to the combustion of coal at ambient pressure teaches that there is a trade-off between NOx and unburned carbon. Namely, measures that are designed to lower NOx will inherently increase levels of unburned carbon, and vice versa.

In an embodiment herein, a manganese-containing additive is combined with a fuel containing, inter alia, coal. The manganese-containing additive catalyzes an improved carbon burnout (i.e. lowering carbon in ash) during the entire combustion process - - both in the high and low temperature regions of the combustion system (i.e. in the flame front with temperatures as high as 3600° F and downstream of this to temperatures as low as 550° F).

On the other hand, NOx reduction occurs only downstream of the flame front at temperatures outside the significant thermal NOx forming temperature range that is above 2500° F. Below about 2500 °, NOx competes with oxygen in the carbon oxidation of manganese-containing combustion byproduct particulate (soot or flyash). The manganese catalyzes this carbon oxidation reaction, which is faster when NOx is the source of oxygen and when the temperatures fall. This carbon oxidation by NOx catalyzed by manganese is efficacious down to a temperature of about 550° F. This NOx reduction chemistry can take place on carbon-containing particulate such as soot or flyash, even when the combustion settings are at a high air to fuel ratio (i.e. running at excess oxygen to stoichiometric, or fuel lean). This is because the environment at the carbon-containing particulate is fuel rich, a condition necessary for NOx reduction. Thus, the manganese mixed with the carbon-containing particulate (fuel-rich) is able to catalyze carbon burnout utilizing either combustion oxygen or NOx as the oxidant. In this manner, carbon in ash is lowered simultaneously with a NOx reduction. Carbon monoxide (CO) levels also drop during use of a manganese-containing additive, showing improved combustion efficiency in converting carbon to the more oxidized carbon dioxide combustion product.

Therefore in another embodiment herein is presented a method of reducing simultaneously the amount of carbon in fly ash, the amount of NOx, and the amount of carbon monoxide resulting from the combustion of coal, the method comprising combining coal and an additive that comprises a manganese-containing compound forming a mixture thereof; and combusting said mixture in a combustion chamber; the manganese-containing compound being present in an amount effective to reduce the amount of carbon in fly ash, the amount of NOx, and the amount of carbon monoxide resulting from the combusting of the coal in the combustion chamber.

Yet another embodiment provides a method of simultaneously reducing both the amount of carbon monoxide and the amount of NOx resulting from the combustion of coal, the method comprising combining coal and an additive that comprises a manganese-containing compound forming a mixture thereof; and combusting said mixture in a combustion chamber; the manganese-containing compound being present in an amount effective to reduce both the amount of carbon monoxide and the amount of NOx resulting from the combusting of the coal in the combustion chamber.

An additional embodiment provides a method of reducing both the amount of carbon in fly ash and the amount of NOx resulting from the combustion of coal, the method comprising combusting coal in the presence of at least 1 ppm of a manganese-containing additive, whereby the amount of carbon in fly ash and the amount of NOx resulting from the combustion of said coal are both reduced relative to the amounts of carbon in fly ash and NOx resulting from the combustion of coal in the absence of the manganese-containing additive.

Yet another additional embodiment provides a method for stabilizing combustion while operating in the FGR mode. When the furnace is operated at an FGR rate to achieve significant NOx reduction, combustion instability is normally experienced as a result of the cooler flame due to the FGR. This instability leads to combustion inefficiency and increased hydrocarbon, carbon monoxide, and particulate with high carbon content (smoke and soot). Thus is provided a method for stabilizing coal combustion by combusting coal in the presence of at least 1 ppm of manganese in a manganese-containing additive, whereby the amount of carbon in fly ash and the amount of NOx resulting from the combustion of said coal are both reduced relative to the amounts of carbon in fly ash and NOx resulting from the combustion of coal in the absence of the manganese-containing additive, and whereby combustion stability is improved relative to the combustion stability of the coal in the absence of the manganese-containing additive.

Examples of manganese-containing compounds useful herein as coal additives include both inorganic and organometallic compounds. Inorganic manganese compounds useful herein can include one or more of manganese oxides, manganese sulfates, and manganese phosphates.

Preferred organometallic compounds in an embodiment of the present invention include alcohols, aldehydes, ketones, esters, anhydrides, sulfonates, phosphonates, naphthenates, chelates, phenates, crown ethers, carboxylic acids, amides, acetyl acetonates, and mixtures thereof. Manganese containing organometallic compounds include manganese tricarbonyl compounds. Such compounds are taught, for example, in US Patent Nos. 4,568,357; 4,674,447; 5,113,803; 5,599,357; 5,944,858 and European Patent No. 466 512 B1.

Suitable manganese tricarbonyl compounds which can be used include cyclopentadienyl manganese tricarbonyl, methylcyclopentadienyl manganese tricarbonyl, dimethylcyclopentadienyl manganese tricarbonyl, trimethylcyclopentadienyl manganese tricarbonyl, tetramethylcyclopentadienyl manganese tricarbonyl, pentamethylcyclopentadienyl manganese tricarbonyl, ethylcyclopentadienyl manganese tricarbonyl, diethylcyclopentadienyl manganese tricarbonyl, propylcyclopentadienyl manganese tricarbonyl, isopropylcyclopentadienyl manganese tricarbonyl, tert-butylcyclopentadienyl manganese tricarbonyl, octylcyclopentadienyl manganese tricarbonyl, dodecylcyclopentadienyl manganese tricarbonyl, ethylmethylcyclopentadienyl manganese tricarbonyl, indenyl manganese tricarbonyl, and the like, including mixtures of two or more such compounds. One example is the cyclopentadienyl manganese tricarbonyls which are liquid at room temperature such as methylcyclopentadienyl manganese tricarbonyl, ethylcyclopentadienyl manganese tricarbonyl, liquid mixtures of cyclopentadienyl manganese tricarbonyl and methylcyclopentadienyl manganese tricarbonyl, mixtures of methylcyclopentadienyl manganese tricarbonyl and ethylcyclopentadienyl manganese tricarbonyl, etc.

Preparation of such compounds is described in the literature, for example, U.S. Pat. No. 2,818,417, the disclosure of which is incorporated herein in its entirety.

The combustion systems that may use the manganese-containing coal additive compounds described herein include any and all internal and external combustion devices, machines, engines, turbine engines, boilers, incinerators, evaporative burners, stationary burners and the like which can combust or in which can be combusted a hydrocarbonacous fuel such as coal. Coal burning furnaces, particularly large systems, are all uniquely designed. However, most have primary air streams that deliver coal to and through a grinding process and eventually to the combustion chamber in the furnace. In the furnace, there may be one or more secondary air streams that also feed air into the combustion chamber.

The manganese-containing coal additive compound can be mixed with the coal either before or simultaneously in the combustion chamber. For instance, the manganese compound may be injected into the primary air stream for mixing with the coal before the combustion chamber. Alternatively, the manganese compound may be injected with a secondary air stream into and mixed in with the coal in the combustion chamber. Finally, the additive having the manganese compound may be injected separately into the coal and directly into the combustion chamber. In any alternative, there will be conditions that cause the effective mixture of the additive having the manganese compound in the coal so that the manganese atoms will be present and available for catalytic activity. The additive can be a liquid form so that it is miscible with liquid fuels and easily dispersed in the combustion air by atomizing nozzles and mild heat.

The treat rate of the manganese compound preferably sufficient to provide an amount of between 1 to about 500 ppm manganese based on the amount of coal. An alternative treat rate is from about 5 to 100 ppm manganese. In a further embodiment, the treat rate is 20 ppm manganese to the coal.

The following example further illustrates certain aspects of the present invention but does not limit the present invention.

### EXAMPLE:

A test was carried out in a 300 megawatt (MW) coal-burning utility furnace. The testing, which lasted 46 days, was roughly split into periods. The first period was a baseline conducted without the use of the manganese-containing additive, the second was conducted with the manganese-containing additive added, and the last period was the baseline repeat. The manganese-containing additive was injected into a flue gas recirculation stream. As a result of the introduction of the manganese-containing additive, NOx levels were observed to drop from an average of 189 ppm to 155 ppm, a lowering of 18 %. At the same time, as a result of the introduction of the manganese-containing additive, the amount of carbon in ash fell from an average of about 20.4% to 9.4%, a decrease of about 54%. To simultaneously lower NOx and carbon in ash with one method or a single additive is unexpected in this type of combustion.

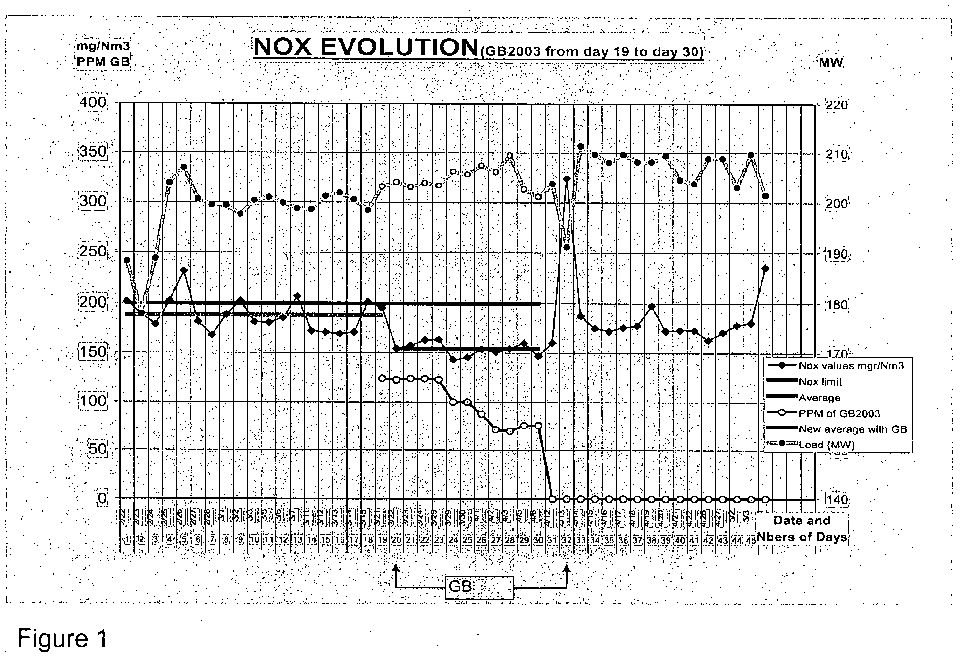

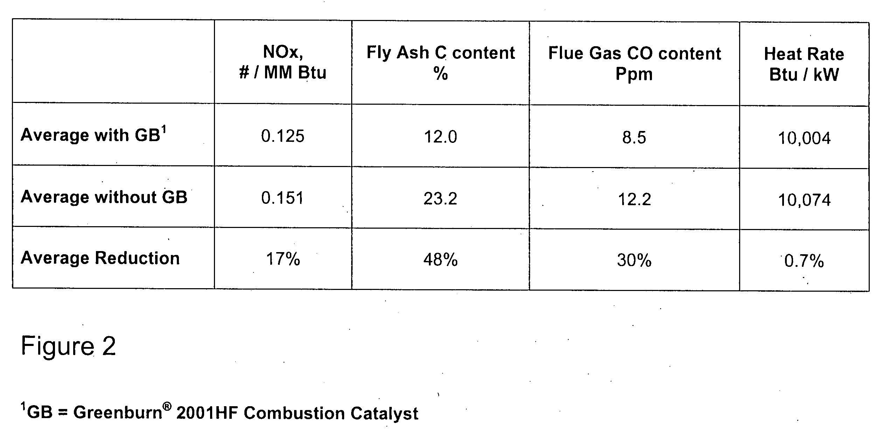

Figures 1 and 2 demonstrate the results of the use of a manganese-containing additive in the simultaneous lowering of carbon in ash and NOx in the combustion products from the foregoing example. Figure 2 demonstrates the results of the use of a manganese-containing additive in the simultaneous lowering of carbon in ash, NOx, and carbon monoxide in the combustion products from the foregoing example. The data were collected from a coal-fired unit burning the same coal for the entire period, and are based on the daily average data at 200 MW plus or minus 10 MW. "GB" represents the introduction of a manganese-containing coal additive referred to as Greenburn® 2001HF Combustion Catalyst into the combustion unit. As can be seen from the results, there was a substantial simultaneous reduction in NOx, carbon in ash, and carbon monoxide. The resulting reduction in NOX was 17%, the reduction in fly ash carbon content was 48 %, and the reduction in flue gas carbon monoxide was 30%.

It is to be understood that the reactants and components referred to by chemical name anywhere in the specification or claims hereof, whether referred to in the singular or plural, are identified as they exist prior to coming into contact with another substance referred to by chemical name or chemical type (e.g., base fuel, solvent, etc.). It matters not what chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together either in performing a desired chemical reaction (such as formation of the organometallic compound) or in forming a desired composition (such as an additive concentrate or additized fuel blend). It will also be recognized that the additive components can be added or blended into or with the base fuels individually per se and/or as components used in forming preformed additive combinations and/or sub-combinations. Accordingly, even though the claims hereinafter may refer to substances, components and/or ingredients in the present tense ("comprises", "is", etc.), the reference is to the substance, components or ingredient as it existed at the time just before it was first blended or mixed with one or more other substances, components and/or ingredients in accordance with the present disclosure. The fact that the substance, components or ingredient may have lost its original identity through a chemical reaction or transformation during the course of such blending or mixing operations or immediately thereafter is thus wholly immaterial for an accurate understanding and appreciation of this disclosure and the claims thereof.

At numerous places throughout this specification, reference has been made to a number of U.S. Patents, published foreign patent applications and published technical papers. All such cited documents are expressly incorporated in full into this disclosure as if fully set forth herein.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

Patentee does not intend to dedicate any disclosed embodiments to the public, and to the extent any disclosed modifications or alterations may not literally fall within the scope of the claims, they are considered to be part of the invention under the doctrine of equivalents.

## Claims

1. A method of reducing both the amount of the amount of NOx and carbon monoxide and/or carbon in fly ash resulting from the combustion of coal, the method comprising
combining coal and an additive that comprises a manganese-containing compound forming a mixture thereof; and
combusting said mixture in a combustion chamber;
the manganese-containing compound being present in an amount effective to reduce both the amount of carbon in fly ash and the amount of NOx resulting from the combusting of the coal in the combustion chamber.

2. The method as described in claim 1, wherein the manganese compound is an organometallic compound.

3. The method as described in claim 2, wherein the organo portion of the organometallic compound is derived from a material selected from the group consisting of alcohols, aldehydes, ketones, esters, anhydrides, sulfonates, phosphonates, naphthenates, chelates, phenates; crown ethers, carboxylic acids, amides, acetyl acetonates and mixtures thereof.

4. The method described in claim 2, wherein the manganese compound is selected from the following group: cyclopentadienyl manganese tricarbonyl, methylcyclopentadienyl manganese tricarbonyl, dimethylcyclopentadienyl manganese tricarbonyl, trimethylcyclopentadienyl manganese tricarbonyl, tetramethylcyclopentadienyl manganese tricarbonyl, pentamethylcyclopentadienyl manganese tricarbonyl, ethylcyclopentadienyl manganese tricarbonyl, diethylcyclopentadienyl manganese tricarbonyl, propylcyclopentadienyl manganese tricarbonyl, isopropylcyclopentadienyl manganese tricarbonyl, tert-butylcyclopentadienyl manganese tricarbonyl, octylcyclopentadienyl manganese tricarbonyl, dodecylcyclopentadienyl manganese tricarbonyl, ethylmethylcyclopentadienyl manganese tricarbonyl, indenyl manganese tricarbonyl, and the like, including mixtures of two or more such compounds, preferably comprises methylcyclopentadienyl manganese tricarbonyl.

5. The method of claim 1, wherein the manganese-containing compound is selected from the group consisting of manganese oxides, manganese sulfates, and manganese phosphates.

6. The method as described in claim 1, wherein the manganese compound is present in an amount sufficient to provide about 1 to 500 ppm manganese, preferably about 5 to 100 ppm manganese, and most preferably about 20 ppm manganese, based on the amount of coal.

7. The method as described in claim 1, wherein the additive is introduced into an air stream that carries the coal into the combustion chamber.

8. A method of claim 1 for reducing both the amount of carbon in fly ash and the amount of NOx resulting from the combustion of coal, the method comprising
combining coal and an additive that comprises a manganese-containing compound forming a mixture thereof; and
combusting said mixture in a combustion chamber;
the manganese-containing compound being present in an amount effective to reduce both the amount of carbon in fly ash and the amount of NOx resulting from the combusting of the coal in the combustion chamber, wherein the additive is introduced directly into the combustion chamber separately from the coal.

9. The method as described in claim 8, wherein the additive is introduced into a flue gas recirculation stream.

10. The method as described in claim 8, wherein the additive is introduced into a secondary air stream that is delivered into the combustion chamber.

11. The method of claim 1 for reducing both the amount of carbon in fly ash and the amount of NOx resulting from the combustion of coal, the method comprising:
combining coal and an additive that comprises a manganese compound to form a mixture thereof;
introducing the mixture of coal and additive into a coal burning combustion chamber;
combusting the mixture in the combustion chamber; and
the manganese compound being present in an amount effective to reduce both the amount of carbon in fly ash and the amount of NOx resulting from the combustion of the coal in the combustion chamber.

12. A coal additive for use in reducing both the amount of carbon in the fly ash and the amount of NOx resulting from the combustion of coal, the additive comprising a manganese compound wherein the manganese compound is added to the coal prior to combustion at a treat rate sufficient to provide the manganese in an amount of about 1 to 500 ppm, preferably about 5 to 100 ppm, and most preferably about 20 ppm of the coal.

13. The method of claim 1 for reducing simultaneously the amount of carbon in fly ash, the amount of NOx, and the amount of carbon monoxide resulting from the combustion of coal.

14. The method of claim 1 reducing the amount of carbon monoxide and the amount of NOx resulting from the combustion of coal.

15. A method of claim 1 for reducing both the amount of carbon in fly ash and the amount of NOx resulting from the combustion of coal, the method comprising combusting coal in the presence of at least 1 ppm of a manganese-containing additive, whereby the amount of carbon in fly ash and the amount of NOx resulting from the combustion of said coal are both reduced relative to the amounts of carbon in fly ash and NOx resulting from the combustion of coal in the absence of the manganese-containing additive.

16. A method for stabilizing coal combustion by combusting coal in the presence of at least 1 ppm of a manganese-containing additive, whereby the amount of carbon in fly ash and the amount of NOx resulting from the combustion of said coal are both reduced relative to the amounts of carbon in fly ash and NOx resulting from the combustion of coal in the absence of the manganese-containing additive, and whereby combustion stability is improved relative to the combustion stability of the coal in the absence of the manganese-containing additive.
